# EUROPEAN PATENT SPECIFICATION

(11) **EP 1 286 516 B1**
(45) Date of publication and mention of the grant of the patent: **31.05.2006**
(21) Application number: 02017738.2
(22) Date of filing: 08.08.2002
(51) Int. Cl.: H04L 29/06, H04Q 7/32, H04N 7/16, H04N 7/173

(54) **Digest transmission system for mobile telephones**
Vorrichtung zum Übertragung von Zusammenfassungsinformation für Mobiltelefonen
Système pour la transmission d' information résumé pour des téléphones mobiles

(30) Priority: 08.08.2001 JP 2001240645; 08.08.2001 JP 2001240646
(43) Date of publication of application: 26.02.2003
(73) Proprietor: Ricoh Company, Ltd., Tokyo 143-8555 (JP); VISUAL SCIENCE LABORATORY, INC., Tokyo 101-0041 (JP)
(72) Inventor: Shiina, Toshio, Kawasaki-shi, Kanagawa (JP)
(74) Representative: Schwabe - Sandmair - Marx

(56) References cited:
- EP-A- 1 094 409
- WO-A-98/44436
- US-A- 5 696 869
- SMYTH B ET AL: "PERSONALIZED ELECTRONIC PROGRAM GUIDES FOR DIGITAL TV" AI MAGAZINE, LA CANADA, CA, vol. 22, no. 2, 2001, pages 89-98, XP001030064 ISSN: 0738-4602
- BARRY SMYTH, PAUL COTTER: "Personalized Electronic Program Guides for Digital TV" SCREAMINGMEDIA, AI MAGAZINE , [Online] 3 August 2001 (2001-08-03), pages 1-5, XP002228396 Retrieved from the Internet: <URL:http://industry.java.sun.com/javanews /stories/print/0,1797,38429,00.html> [retrieved on 2003-01-23]

## Description

### BACKGROUND OF THE INVENTION

### 1. Field of The Invention

The present invention relates to a digest transmission system for mobile telephones, a digest transmission method, a digest transmission server for mobile telephones, an index creation terminal, a mobile telephone, a favorite data registration method, and a storage medium that stores a program thereof.

### 2. Description of The Related Art

In recent years, various services have come to be offered using the Internet etc. For example, there are various sites that offer multimedia data, such as moving picture and voice, on the network.

These sites are provided such that each user downloads from the site to its terminal the multimedia file, which is created in a predetermined form using protocols, such as FTP (file transfer protocol). The multimedia file, which is received at the user terminal in this way, is reproduced on the user terminal by using an application program built into the user terminal.

Moreover, with improvements in the performance of mobile telephones, an increasing number of sites which offer such multimedia data services for mobile telephones are also beginning to appear on the network.

However, the data of multimedia contents, such as images and voices, are large in size and, generally, the communication cost needed to download them is relatively high and the communication time to download them is relatively long.

Furthermore, in a case in which the services are aimed at mobile telephones, a certain amount of limit arises by the issue of the terminal performance in the size of the data of multimedia contents to transmit on the network. For this reason, in order to include many items of information into the multimedia data, it is necessary to collect data of multimedia contents in an intensive manner.

Moreover, the multimedia contents, currently offered in the above-mentioned services, are created based on the contents determined by the server side, and the services are not intended to offer only a portion of the multimedia data that are really demanded by the user.

US 5,696,869, on which the preamble of claim 1 is based, discloses a video delivery system and a method for storing a plurality of videos and video segment maps, wherein each of the video segment maps defines a plurality of video segments of a corresponding video, said plurality of video segments comprising non-sequential parallel, transitional and overlapping video segments. A request for a video is received from a remote video retriever, the request providing for a key word; then video content preferences of the remote video retriever are established; then video sequences are selected in response to an application of the video content preference to a video segment map of the requested video; then the selected video segments are retrieved; and then the retrieved video segments are provided to the remote video retriever.

### SUMMARY OF THE INVENTION

According to a first aspect of the present invention there is provided an improved digest transmission system and method for mobile telephones in which the above-described problems are eliminated.

According to another aspect of the present invention there is provided a digest transmission system that is capable of transmitting collected data of multimedia contents suited to the demand of the user.

According to another aspect of the present invention there is provided a digest transmission server that is capable of transmitting collected data of multimedia contents suited to the demand of the user.

According to another aspect of the present invention there is provided an index creation terminal which is appropriate for use with a digest transmission system that is capable of transmitting collected data of multimedia contents suited to the demand of the user.

According to another aspect of the present invention there is provided a mobile telephone which is appropriate for use with a digest transmission system that is capable of transmitting collected data of multimedia contents suited to the demand of the user.

According to another aspect of the present invention there is provided a digest transmission method that is capable of transmitting collected data of multimedia contents suited to the demand of the user.

According to another aspect of the present invention there is provided a favorite data registration method-which is appropriate for use with a digest transmission method that is capable of transmitting collected data of multimedia contents suited to the demanded of the user.

According to another aspect of the present invention there is provided a storage medium which stores program codes causing the computer to execute a digest transmission method that is capable of transmitting collected data of multimedia contents suited to the demand of the user.

According to aspects of the present invention, there is provided a system as defined in claim 1, a method as defined in claim 10 and a storage medium storing program code as defined in claim 14.

Further embodiments according to the present invention are as set forth in the dependent claims.

### BRIEF DESCRIPTION OF THE DRAWINGS

Other objects, features and advantages of the present invention will be apparent from the following detailed description when read in conjunction with the accompanying drawings.
FIG. 1 is a diagram of the overview of a digest transmission system according to the present invention.
FIG. 2 is a diagram showing the configuration of the digest transmission system of the first preferred embodiment of the invention.
FIG. 3 is a diagram for explaining the data structure of a multimedia-content database used in the first preferred embodiment of the digest transmission system.
FIG. 4 is a diagram for explaining the data structure of a user-specific favorite data database used in the first preferred embodiment of the digest transmission system.
FIG. 5 is a diagram for explaining the data structure of a keyword database used in the first preferred embodiment of the digest transmission system.
FIG. 6 is a diagram for explaining the relationship between the index, the multimedia content and the digest in the first preferred embodiment of the digest transmission system.
FIG. 7 is a block diagram of an index creation terminal used in the first preferred embodiment of the digest transmission system.
FIG. 8 is a diagram showing an example of an index creation support menu used by the first preferred embodiment of the digest transmission system.
FIG. 9 is a diagram showing an example of a favorite data registration support menu used by the first preferred embodiment of the digest transmission system.
FIG. 10 is a diagram for explaining the sequence of operations of a favorite data registration procedure performed by the first preferred embodiment of the digest transmission system.
FIG. 11 is a diagram for the sequence of operations of a digest creation and distribution procedure performed by the first preferred embodiment of the digest transmission system.
FIG. 12 is a diagram showing an example of a multimedia content choice menu used by the first preferred embodiment of the digest transmission system.
FIG. 13 is a diagram for explaining the relationship between the index and the content clip in a digest transmission system of the second preferred embodiment of the present invention.
FIG. 14 is a diagram for explaining the relationship between the desired time length and the time lengths of respective content clips with significance ranks for the digest that is created in the second preferred embodiment of the digest transmission system.

### DETAILED DESCRIPTION OF PREFERRED EMBODIMENTS

A description will now be provided of preferred embodiments of the present invention with reference to the accompanying drawings.

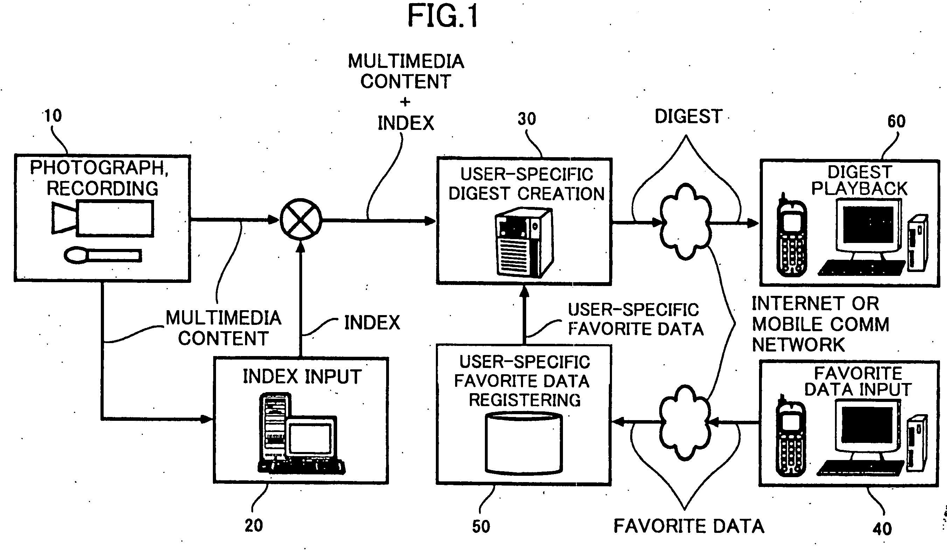

FIG. 1 shows the overview of the digest transmission system according to the present invention.

As shown in FIG. 1, in the digest transmission system of the present invention, a photograph/recording unit 10 acquires the data of multimedia content (image and voice data) by carrying out the photography, recording, etc. In the digest transmission system of the present invention, an index creation unit 20 creates the metadata (it is also called the meta-content) as an index to the data of multimedia content, and assigns it to the data of multimedia content.

Thus, a predetermined portion of the multimedia content and the index, which are created, is extracted with reference to the index, this is combined, and a user-specific digest creation unit 30 creates a new data of the multimedia content based on user-specific favorite data supplied from a user-specific favorite data registering unit 50. In the following description, this new data, of the multimedia content will be called a digest.

A favorite data input unit 40 of a mobile telephone or a personal computer on the side of the user transmits the user-specific favorite data, which is given by the user, through a communication network (the Internet or a mobile communication network) to the user-specific favorite data registering unit 50.

Moreover, the created digest is transmitted through the communication network (the Internet or a mobile communication network) to the mobile telephone on the side of the user. In the mobile telephone, a digest playback unit 60 plays back the digest.

Furthermore, a digest may be created based on a keyword that is specified by the user (this is hereafter called the favorite data), or a digest may be created based on a predetermined keyword that is prepared beforehand by the side of the digest transmission system.

In addition, when a digest is created, the data of the multimedia content may be either a single item of multimedia information or two or more items of multimedia information.

A description will now be given of the digest transmission system of the first preferred embodiment of the present invention.

In the present embodiment, the digest transmission system creates a digest based on the user-specific favorite data registered by the user, and transmits the digest through the communication network to the user terminal.

### Configuration of First Preferred Embodiment

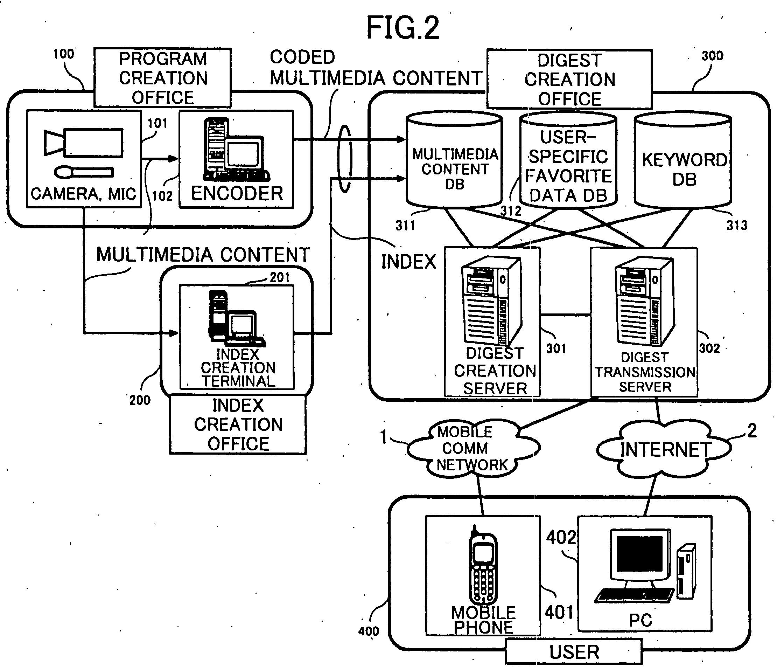

FIG. 2 shows the configuration of the digest transmission system of the first preferred embodiment of the invention.

As shown in FIG. 2, in the digest transmission system of the present embodiment, a program creation office 100, an index creation office 200, a digest creation office 300, and a user terminal 400 are provided. The program creation office 100 creates data of multimedia content. The index creation office 200 creates an index to the data of multimedia content created by the program creation office 100. The digest creation office 300 creates a digest based on the data of multimedia content to which the index is assigned, and based on the user-specific favorite data registered by the user terminal 400.

The digest creation office 300 transmits the digest through a communication network (either a mobile communication network 1 or the Internet 2) to the user terminal 400 (either a mobile telephone 401 or a personal computer 402). The user terminal 400 receives the digest sent by the digest creation office 300 and plays back the received digest.

### Program Creation Office 100

In the present embodiment, the program creation office 100 creates the data of multimedia contents, such as image and/or voice data, by using a camera and/or microphone 101. It is assumed that such created date of multimedia contents contain time codes each representing time information of one of respective frames and scenes of the multimedia information.

The created data of multimedia contents are encoded by an encoder 102 utilizing a predetermined compression method (MPEG2, MPEG4, etc.). The encoder 102 is provided in a computer in the program creation office 100. The data of multimedia contents are also transmitted from the camera and/or microphone 101 to the index creation office 200.

Moreover, the coded data of multimedia contents from the encoder 102 are stored into the multimedia-content database 311 of the digest creation office 300 through a predetermined network. The predetermined network which is applicable to the present embodiment is not limited, and it may be a wired or wireless network or other networks.

### Index Creation Office 200

In the index creation office 200, the indexes to the multimedia contents which received from the program creation office 100 are created by the index creation terminal 201. The index creation terminal 201 is constituted by a computer. In the present embodiment, the index is assigned to the multimedia content data by utilizing the MPEG7 description interface of multimedia contents. However, the present invention is not limited to this embodiment, and variations and modifications may be made within the scope of the appended claims if it is possible to extract arbitrary times or data areas in the multimedia content data based on predetermined information, such as metadata (keyword).

Moreover, together with the multimedia content data, the index that is created in this way is transmitted to the digest creation office 300 through the predetermined network, and stored in the multimedia content database 311.

### Digest Creation Office 300

In the digest creation office 300, based on the user-specific favorite data registered by the user terminal 400, the digest for every user is created. The digest is transmitted from the digest creation office 300 to the user's mobile telephone 401 through a mobile communication network 1.

For this reason, the digest creation office 300 is provided with the multimedia content database 311 and the user-specific favorite data database 312. The multimedia content database 311 is provided to store multimedia contents, and the user-specific favorite data database 312 is provided to store the user-specific favorite data that are given by the user terminal 400. In addition, the digest creation office 300 is provided with the keyword database 313, and the keyword database 313 is provided to store the information, such as keywords and genres, which are used when creating the index.

Moreover, the digest creation server 301 and the digest transmission server 302, which are connected to each of the databases 311-313, are provided in the digest creation office 300. Digest Creation Server 301

The digest creation server 301 is a server which creates the digest for every user based on the multimedia content data and the corresponding index stored in the multimedia content database 311 and the user-specific favorite data stored in the user-specific favorite data database 312.

In the present embodiment, the digest creation server 301 is configured to create the digest when a request for distribution of the digest is sent from the user terminal 400 to the digest transmission server 302. The operations of the digest creation server 301 will now be described.

In the present embodiment, the request for distribution of the digest from the user terminal 400 is received at the digest transmission server 302, and, upon receipt of the distribution request, the digest transmission server 302 transmits a request for creation of the digest to the digest creation server 301.

The digest creation server 301 may be constituted by either a single computer or a plurality of computers. The digest creation server 301 transmits the created digest to the digest transmission server 302. At this time, the personal information (for example, user ID, etc.) to identify the target user is transmitted to the digest transmission server 302 together with the digest.

### Digest Transmission Server 302

The digest transmission server 302 transmits the digest, which is received from the digest creation server 301, through a communication network (for example, the Internet 2 or the mobile communication network 1) to the mobile telephone 401 which is the terminal having sent the digest distribution request to the digest transmission server 302.

Moreover, the digest transmission server 302 stores the user-specific favorite data, which is received through the network from the user terminal 400, into the user-specific favorite data database 312 for every user.

The communication lines which interconnect the respective servers and the respective databases in the digest creation office 300 may be constituted by either the LAN line using the Ethernet cable or the wireless circuit, or the common-carrier leased line using the serial communication circuit.

Furthermore, in the present embodiment, the network which connects the digest creation office 300 and the user terminal 400 is constituted by the mobile communication network 1 corresponding to the mobile telephone 401 in the user terminal 400. However, it is possible that either the Internet 2 or the mobile communication network 1 be used as the network connecting the digest creation office 300 and the user terminal 400 depending on whether the user terminal sending the digest distribution request is the mobile telephone 401 or the personal computer 402.

Moreover, if it is the case where the mobile telephone 401 is replaced by a personal handy phone system (PHS) or the like which can reproduce multimedia contents and can be carried by the user, the network which is suited for the PHS may be applied to the digest transmission system.

The communication network which connects the digest creation office 300 and the user terminal 400 may be modified variously depending on the terminal in the user terminal 400.

For example, if the user terminal 400 is the PC 402 which is the personal computer as shown in FIG. 2, it is possible to apply the Internet 2, a public telephone network, etc. as the communication network. Moreover, if the user terminal 400 is a portable handyphone system (PHS) or another portable terminal which can reproduce other multimedia contents, it is possible to apply the communication network which is suited to such terminal.

In the present embodiment, the digest transmission server 302 is formed by a single computer. Alternatively, two or more computers may form the digest transmission server 302 in the digest transmission system of the present invention.

Furthermore, in the present embodiment, the digest creation server 301 and the digest transmission server 302 are formed by two different computers. Alternatively, they may be formed by the same computer.

Next, an example of the data structure of each database mentioned above will be described. The database in the present embodiment may be configured as the relational database. Alternatively, the database may be configured by using a usual file format.

### Multimedia Content Database 311

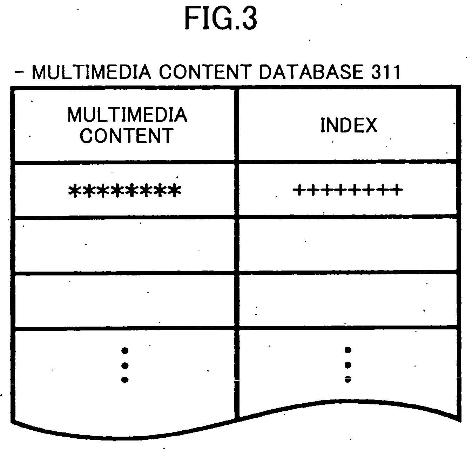

FIG. 3 shows the data structure of the multimedia-content database 311 used in the first preferred embodiment of the digest transmission system.

As shown in FIG. 3, the multimedia content database 311 stores in the same record the multimedia content data which are received from the program creation office 100, and the index which is made to correspond to this and created in the index creation office 200.

The correspondence of the time axes, such as each frame or scene, is achieved by using the time code.

### User-Specific Favorite Data Database 312

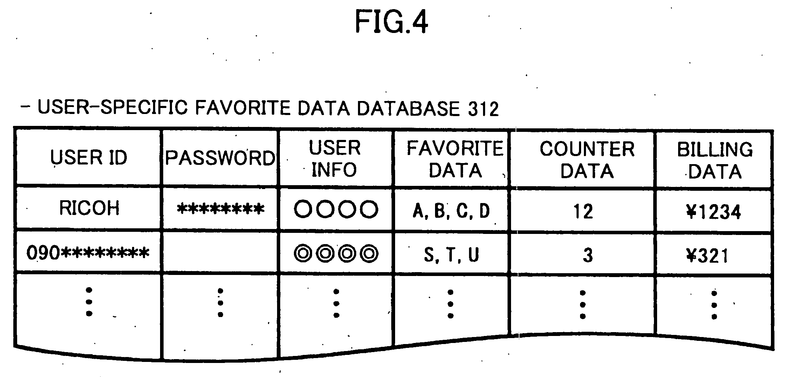

FIG. 4 shows the data structure of a user-specific favorite data database 312 used in the first preferred embodiment of the digest transmission system.

As shown in FIG. 4, the user-specific favorite data database 312 stores in the same record the user information which contains personal information, such as the user ID and password assigned in order to identify each user uniquely, the user name, the user address, the e-mail address, and the contents of the user contract, and the user-specific favorite data input by the user 400.

It is possible to consider as the telephone number to which the user ID is assigned by the mobile telephone 401.

Moreover, when the user ID is made into a telephone number, it is possible to delete and constitute the item of a password.

Moreover, it is possible to constitute so that each user may, in addition to this, also store the information (counter information) on how many times the digest is downloaded at the present time, and the information on the billing to the user (billing information) from a predetermined period or user's registration.

### Keyword Database 313

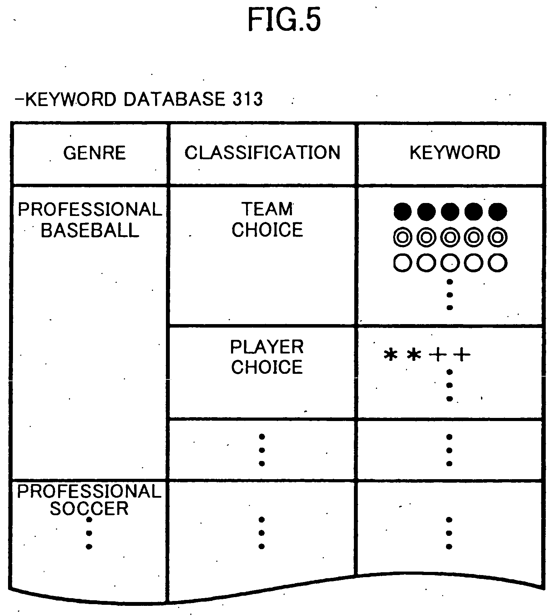

FIG. 5 shows the data structure of a keyword database 313 used in the first preferred embodiment of the digest transmission system.

As shown in FIG. 5, the keyword database 313 is the composition of being used in order to limit the word (keyword) used when creating an index, or in case favorite data is registered.

However, the present invention must not necessarily limit the keyword used for an index or favorite data. In order to make it possible to give the candidate of a keyword as alternative in the case of index creation or favorite data registration, and to create an index and favorite data more quickly and exactly by creating each based on this, and to create a digest efficiently in this explanation, the composition which uses the keyword database 313 is mentioned as an example.

As shown in FIG. 5, the items of a genre, a classification, and a keyword are stored as the same record in the keyword database 313.

It is assumed that the genre is a genre to which the contents of the target multimedia content belong, for example, the data of multimedia contents are classified, such as "professional baseball", "professional soccer", "news", "popular song", and "movie".

The genre is determined in the digest creation office 300 or the index creation office 200.

Moreover, if a keyword is a metadata added to a multimedia content as an index, the keyword belongs to the genre of "professional baseball", it is a name, a term, etc. which, and are a player name or are used for the genres, such as "home run", "hit", " strikeout", "steal home".

This keyword is also determined in the digest creation office 300 or the index creation office 200.

Furthermore, a classification is classified in order to make the keyword choose easily.

For example, with respect to a professional baseball team name, the classification "specified by player" is given for the classification "specified by professional baseball team" to a set of a player name again.

Thus, it is possible to make it easy to narrow of the list of the keywords by the operator on the user terminal 400 or the index creation office 200, and to make the target keyword set up easily by assigning a classification to each keyword.

Moreover, when each database by this preferred embodiment stores the above items, the digest creation server 301 creates a digest for every user, and the digest transmission server 302 is able to transmit the digest to the target mobile telephone 401 of user terminal 400.

Moreover, if it does not pass over each database to an example for realizing this preferred embodiment but it stores the required information in this preferred embodiment, it deforms variously and it can be carried out.

### User Terminal 400

In the present embodiment, the mobile telephone 401 which can reproduce multimedia contents is illustrated as a terminal provided in the user terminal 400 that reproduces the received digest.

The mobile telephone 401 is configured so that the applet created by the JAVA program can be performed, and any of the mobile telephones offered from the manufacturers in recent years is applicable.

### Relationship Between Index, Multimedia Content and Digest

Next, a description will be given of the relationship between the digest created based on the multimedia content in the first preferred embodiment, the index created to the data, and the multimedia content data.

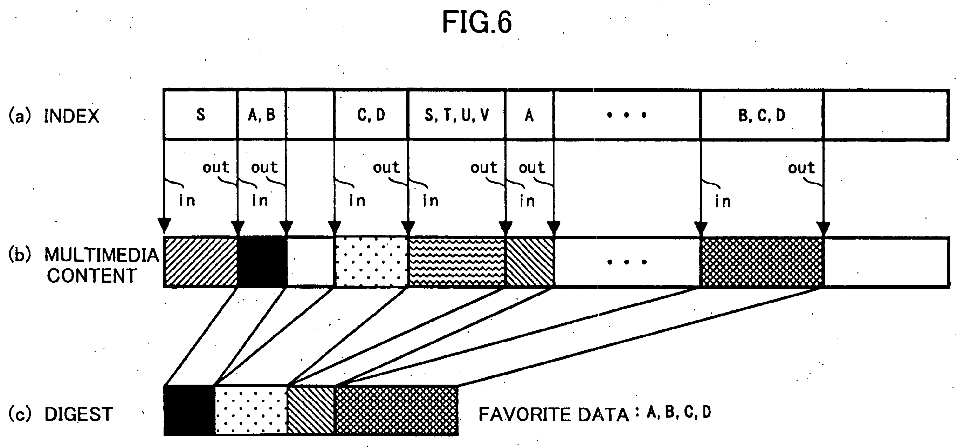

FIG. 6 shows the relationship between the index, the multimedia content and the digest in the first preferred embodiment of the digest transmission system. In FIG. 6, (a) indicates the index assigned to multimedia content data, (b) indicates the multimedia content data, and (c) indicates the digest created by the present embodiment. These are setting the time-axis as the longitudinal direction, respectively.

The index by this preferred embodiment divides the multimedia content created in the program creation office 100 to the direction of a time-axis. The divided multimedia content is called content clip by the following explanation.

In order to realize such division, the "OUT" command is added for the "IN" command to the index by this preferred embodiment to the rear to the head of a content clip. This can be realized by using MPEG-7 (description interface of a multimedia content).

In the present embodiment, the content clip corresponding to the favorite data registered from the user 400 among the content clips which divided as mentioned above and were created is extracted, these are combined, and a digest as shown in (c) of FIG. 6 is created.

Thus, the processing which creates a digest based on both the index and multimedia content data stored in the multimedia content database 311 and the favorite data stored in the user-specific favorite data database 312 is performed by the digest creation server 301.

### Index Creation Support

Next, a description will be given of an example of the index creation terminal 201 having the function to support the index creation operations of the user. This function is provided for the user to create an index quickly and exactly.

### Index Creation Support Function Block

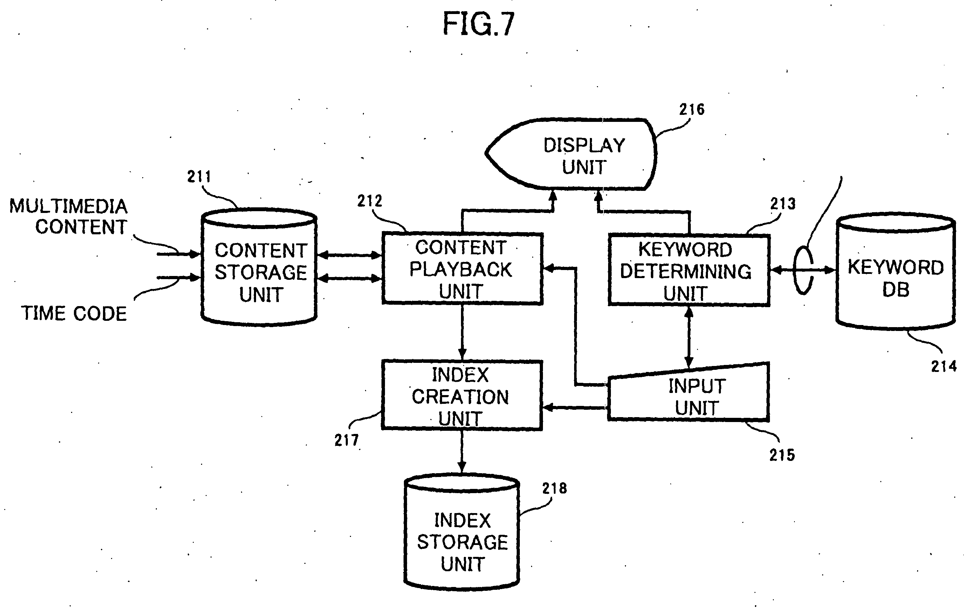

FIG. 7 shows the configuration of the index creation terminal 201 in the first preferred embodiment of the digest transmission system.

As shown in FIG. 7, the index creation terminal 201 in the present embodiment includes a content storage unit 211 that temporarily stores the multimedia content data (including the time codes) which are received from the program creation office 100. A content playback unit 212 converts the multimedia content data, stored in the contents storage unit 211, into a playback signal according to the time codes. A display unit 216 is provided to reproduce the image and voice based on the playback signal produced by the content playback unit 212.

Accordingly, the multimedia content data, which are received from the program creation office 100, are displayed on the display unit of the index creation terminal 201.

Moreover, the content playback unit 212 performs the processing of playback, stop, halt, fast-reverse, fast-forward, etc. of the multimedia content data according to the commands given from the input unit 215.

In addition, the keyword database 214 (313) is provided in the outside or the inside of the index creation terminal 201. The keyword database 214 has the data structure that is essentially the same as the data structure of the keyword database 313 in the digest creation office 300. Therefore, it is possible that the keyword database 214 be separately provided in the index creation office 200, or it is possible that the keyword database 313 be provided in the digest creation office 300 and shared by the index creation office 200 and the digest creation office 300.

However, in the latter case, the index creation terminal 201 accesses through a predetermined network (the Internet, a public telephone network, a leased line, etc.) to the keyword database 313 of the digest creation office 300 when it is needed.

In the index creation terminal 201, the keyword determining unit 213 specifies first the candidate of a corresponding classification to the keyword candidate database 214 based on the designation of the genre given by the operator on the input unit 215. The specified candidate of the classification is displayed on the display unit 216 as a list.

The displayed candidate of the classification in the list may be constituted to provide the function to select one of choices, including the respective GUI (graphical user interfaces), by using the input unit 215.

Furthermore, when the selection is given from the input unit 215 based on the display on the display unit 216, the selected information is sent to the keyword determining unit 213, and the candidate of a keyword applicable to the selected classification is determined based on the keyword database 214 (313).

Moreover, the keyword determining unit 213 displays the determined candidate of the keyword on the display unit 216 as a list. The displayed candidate of the keyword in the list may be constituted to provide the function to select one of choices, including the respective GUI (graphical user interfaces), by using the input unit 215.

The user inputs, from the input unit 215, the selection of the keyword being added to the multimedia content data, and the "IN" command or the "OUT" command. The selection information and the commands that are given by the user are sent to the index creation unit 217.

The content playback unit 212 always transmits, or when needed, the position on the time axis (or the second/minute/hour from the start of the multimedia content data, which will hereinafter be called scene information) with respect to the image or audio data currently reproduced on the display unit 216, to the index creation unit 217.

Therefore, the index creation unit 217 assigns the index, which includes the "IN" command, the "OUT" command, the keyword, etc., to the corresponding portion of the multimedia content data based on both the selection information and the command given from the input unit 215 and the scene information given from the content playback unit 212.

Moreover, the index created in this way is stored in the index storage unit 218. After this, the stored index is transmitted to the digest creation office 300, and it is temporarily stored in the multimedia content database 311.

In the present embodiment, the input unit 215 is provided with the GUI (graphical user interfaces).

Furthermore, when the keyword database 214 (313) is provided in the digest creation office 300, it is possible that the index creation terminal 201 may read collectively the classification corresponding to the genre specified at the time of creation of the index and the keyword corresponding to the classification. Such information may be stored in a storage device, such as a hard disk, which is connected by an internal interface, or serial interface, or an IEEE1394-based leased line. Or such information may be stored in the cache memory, RAM, etc. of the index creation terminal 201. Index Creation Support Menu

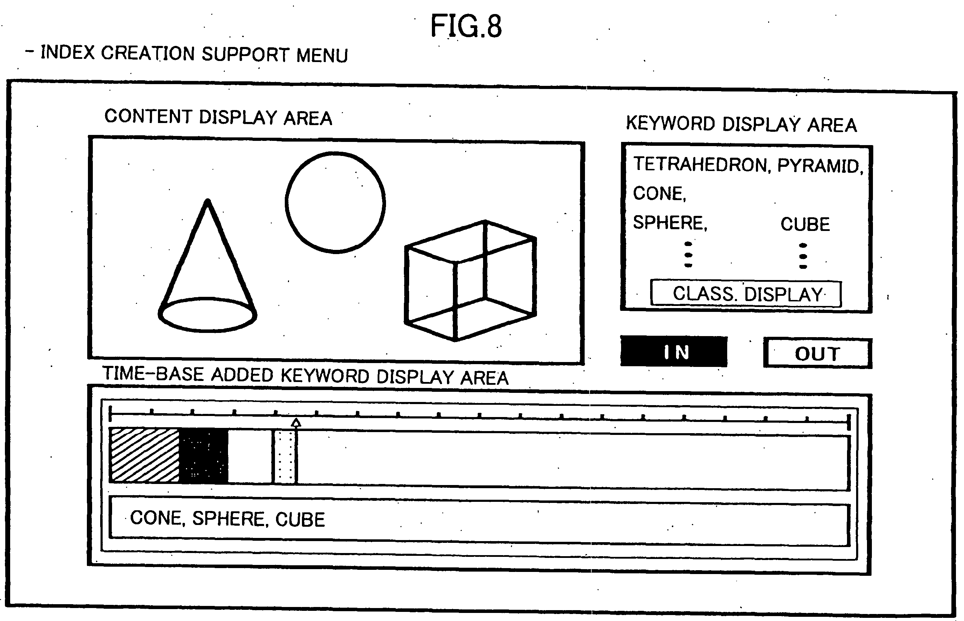

FIG. 8 shows an example of the index creation support menu used by the first preferred embodiment of the digest transmission system. As shown in FIG. 8, the screen of the index creation support menu is displayed on the display unit 216 of the index creation terminal 201 in the first preferred embodiment.

Referring to FIG. 8, the index creation support menu in the present embodiment includes the content display area, the keyword display area, and the time-based added keyword display area.

In the present embodiment, the content display area is an area where the multimedia content data is displayed and reproduced. The keyword display area is an area where the classification specified from the keyword candidate database 214 (313) is displayed. Moreover, in the keyword display area, the keyword corresponding to the classification is displayed as a list when it is chosen from among the items of the classification.

Moreover, when the keyword is being displayed, it is preferred that the "CLASS. DISPLAY" button be provided in order for returning to the classification display mode when it is clicked.

The time-based added keyword display area is an area which indicates the position of the scene on the time-axis, currently reproduced on the display unit 216, with respect to the multimedia content data.

An additional area may be provided in the index creation support menu, which indicates how the multimedia content data are divided. Moreover, an additional area may be provided in the index creation support menu, indicating which portion of the multimedia content data a specific keyword is assigned to when the data are being reproduced on the display unit.

In the index creation support menu, if the "IN" command is selected by clicking the button, this information is sent to the index creation unit 217 from the input unit 215. In the index creation unit 217, the index which assigns the "IN" to a predetermined scene is created based on the "IN" command given by the input unit 216 and the scene information given by the content playback unit 212.

In the present embodiment, if a specific keyword in the keyword display area is clicked, the selected keyword is sent to the index creation unit 217. The keyword will be assigned to the scene or subsequent ones where the "IN" command is added.

Moreover, in the present embodiment, a plurality of keywords may be added at a time.

In the index creation support menu, if the "OUT" command is selected by clicking the button, this information is sent to the index creation unit 217 from the input unit 215. In the index creation unit 217, the index which assigns the "OUT" to a predetermined scene is created based on the "OUT" command given from the input unit 215 and the scene information given from the content playback unit 212.

In this way, the index which matches the selected keyword which is given by the operator the "IN" or the "OUT" is created.

Moreover, as for the area selected with the "IN" or the "OUT", it is preferred that an additional keyword display area be provided (for example, the bar graph in FIG. 8), so that the whole time can be varied. In this regard, it is possible that the whole time is varied when the boundary line (indicated by the solid line in FIG. 8) of each area is moved in the direction of the time axis by using a mouse.

In the present embodiment, the information about the position on the time axis of the destination of the boundary line may be determined by the content playback unit 212 based on the information given from the input unit 215.

The result of the determination is sent to the index creation unit 217, and the information about the target boundary line is given from the input unit 215. The index creation unit 217 performs renewal of the index concerning the boundary based on the information given in this way.

Moreover, it is preferred that the index creation support menu is configured so that it may be possible to add a keyword to the area that is divided with the "IN" command and the "OUT" command. Favorite Information Registration Support

Next, a description will be given of the configuration in the present embodiment which supports the user when performing the registration of the favorite data in the digest creation office 300.

In the present embodiment, in order to support the user when registering the favorite data in the digest creation office 300, a predetermined input screen (a favorite data registration support menu) is transmitted from the digest creation office 300 to the user's mobile telephone 401.

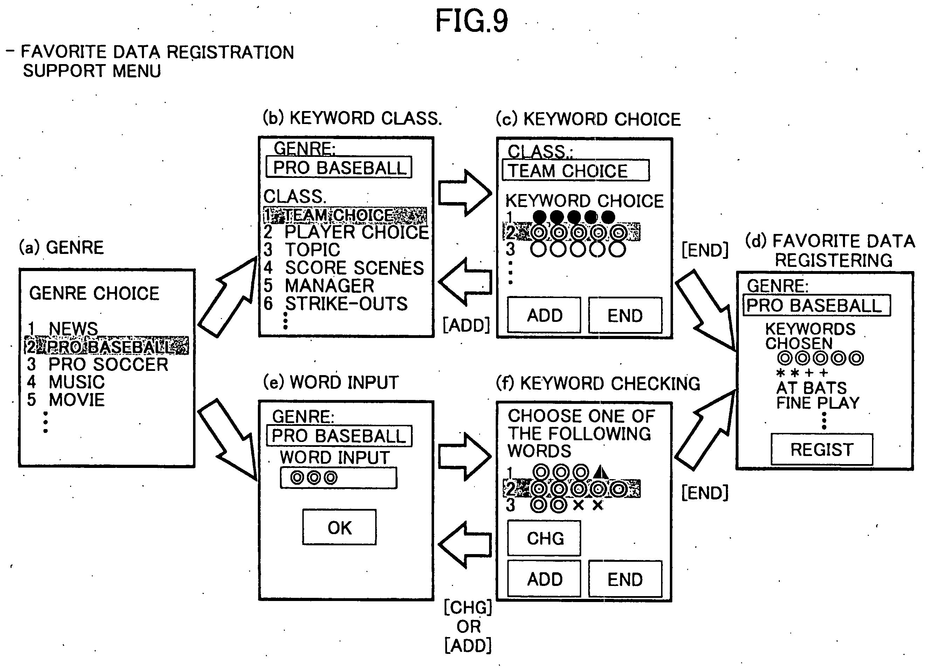

FIG. 9 shows an example of the favorite data registration support menu used by the first preferred embodiment of the digest transmission system.

As shown in FIG. 9, offers first the screen ((a) of FIG. 9) which chooses a genre as first favorite data registration support screen to a mobile telephone 401 in this preferred embodiment. As for this, it is good to constitute so that it may provide from the digest transmission server 302 in FIG. 2.

Moreover, if which genre is chosen from a user in this screen, this selection information will be transmitted to the digest transmission server 302.

As a method of supporting subsequent favorite data registration, two kinds of methods are illustrated in this explanation.

### Keyword Choice Method

First, it is the method as which the keyword for which offers as alternative the keyword beforehand registered in the keyword database 313 of the digest creation office 300 as the first example, and it asks from this inside to the user terminal 400 is made to choose.

Hereafter, this method is explained using (b) - (d) of FIG. 9. However, the keyword shall be classified for every classification.

By this method, if the user terminal 400 chooses a desired genre from the screen of (a) of FIG. 9, it will specify from the keyword database 313 which shows the classification which is matched and is stored in this genre in FIG. 5, and the screen ((b) of FIG. 9) of the list which made this classification alternative will be transmitted to a mobile telephone 401.

In a mobile telephone 401, selection divisional any they are transmits this selection information to the digest transmission server 302. If divisional selection information is notified next, the digest transmission server 302 will specify the keyword stored corresponding to the selected classification (both the genre and the classification) from the keyword database 313, and will transmit the screen ((c) of FIG. 9) of the list which made this keyword alternative to a mobile telephone 401.

Therefore, in the screen shown in (c) of FIG. 9, the user terminal 400 chooses the keyword for which it asks, and registers with the favorite data database 312 classified by user in the digest creation office 300 as favorite data.

However, when registering two or more keywords, in the screen shown in (c) of FIG. 9, the user terminal 400 chooses an "additional" button and transmits this.

Again, the digest transmission server 302 which received the selection information of this button transmits the screen of (b) of FIG. 9, and performs the same operation as the above henceforth.

Moreover, the user who chose all keywords chooses the button of "completion" in FIG. 9, and transmits this. The digest transmission server 302 which receives the selection information of this button is registered into the same record as the information on the user ID in the user-specific favorite data database 312, or others by making into favorite data the genre and keyword which are chosen from (a) of FIG. 9 in a series of the previous flows.

### Word Input Method

Next, it is the method into which word to make into a keyword to the user terminal 400 as the second example is made to input.

In this case, since the word given by the user terminal 400 cannot necessarily use it as a keyword as it is, when it searches the keyword (beforehand registered to the keyword database 313 of the digest creation office 300) which corresponds or is similar to the given word in the digest creation office 300 from the keyword database 313 and what corresponding exists, the necessity of constituting so that the registration as favorite data may be permitted exists.

Hereafter, this method is explained using (e) of FIG. 9, (f), and (d). The keyword database 313 in this embodiment is good in the data structure shown in FIG. 5 as the composition which deletes the divisional item (attribute).

By this method, if the user terminal 400 chooses a desired genre from the screen of (a) of FIG. 9 next, the digest transmission server 302 will transmit the screen shown in (e) of FIG. 9 to a mobile telephone 401. In the screen shown in (e) of the view 9 displayed on the mobile telephone 401, the user terminal 400 inputs the word for which it asks, is choosing a "definite" button and transmits the given word to the digest transmission server 302.

The digest transmission server 302 checks whether based on the selection and word of a genre which were received above, the keyword database 313 is searched and the corresponding keyword exists.

As for the digest transmission server 302, it is good to constitute so that the retrieval specified to similar word may be performed.

The keyword specified by such retrieval is transmitted to the mobile telephone 401 as a list, as shown in (f) of FIG. 9. Moreover, this list functions also as alternative. Therefore, in the screen shown in (f) of FIG. 9, the user terminal 400 chooses an "additional" button or the button of "completion", when the keyword for which it asks exists. That is, when adding a keyword further, an "additional" button is chosen and it returns to the screen of (e) of FIG. 9, when all keywords finish being chosen, the button of "completion" is chosen, and the transmitted favorite data (information on the selected genre and the selected keyword) is checked ((d) of FIG. 9).

Moreover, when the keyword for which it asks in a list does not exist, the user terminal 400 chooses the button of "correction" in (f) of FIG. 9, and inputs word again.

However, the word at the time of "correction" being chosen shall be canceled in the digest transmission server 302.

By such method, the favorite data for every user 400 is registered into the favorite data database 312 classified by user. Operations of First Preferred Embodiment

Next, a description will be given of operations of the first preferred embodiment of the present invention.

The operations of the present embodiment are realized when the following procedures are executed: (1) multimedia content creation procedure; (2) index creation procedure; (3) favorite data registration procedure; and (4) digest creation (distribution) procedure.

### (1) Multimedia Content Creation Procedure

At a start of the multimedia content creation procedure, a multimedia content is created in the index creation office 100, and this is transmitted to the index creation office 200 and the digest creation office 300 through a predetermined network (the Internet, the public telephone network, etc.).

It not only transmits this as a file, but transmission of the multimedia content to the index creation office 200 can use analog broadcasting, digital broadcast, etc.

Moreover, transmission of the multimedia content to the digest creation office 300 can also be constituted so that what was coded by the technology of MPEG2, MPEG4, or others may be transmitted.

Moreover, the time code which is needed in case a content is reproduced is also transmitted in the case of transmission of this multimedia content.

As for this, it is good to constitute so that it may multiplex with a multimedia content by the rate or sign division several minutes and may be transmitted.

### (2) Index Creation Procedure

The index to the multimedia content is created in the index creation office 200 which receives the multimedia content transmitted as mentioned above. This may be performed by using the MPEG7 based technology as previously described.

### (3) Favorite Data Registration Procedure

Next, a description will be given of the operation at the time of the user terminal 400 registering the favorite data into the digest creation office 300.

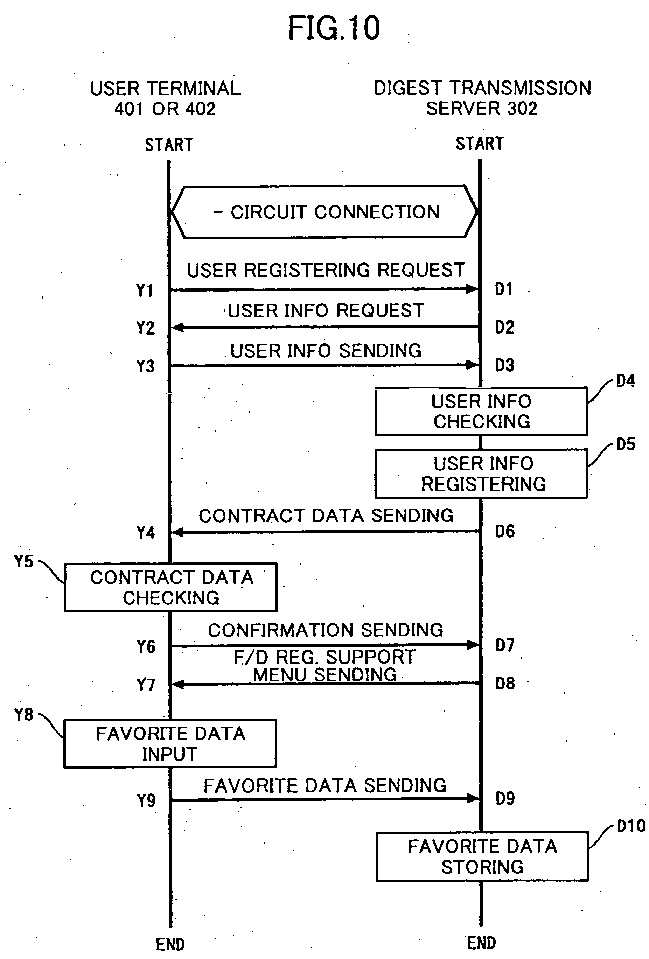

FIG. 10 shows the sequence of operations of a favorite data registration procedure performed by the first preferred embodiment of the digest transmission system.

In FIG. 10, if a mobile telephone 401 and the digest transmission server 302 establish a circuit, a mobile telephone 401 will require self user's registration from the digest transmission server 302 first (Y1 →D1).

This is realized by inputting and choosing the commands which the mobile telephone 401 accesses the predetermined websites transmitted from the digest transmission server 302 and requires the registration.

The digest transmission server 302 which receives the user's registration demand requires the user information from the mobile telephone 401 first (D2 →Y2).

As the information demanded here, they are as the user's name (name) and the address (address), the e-mail address, the contents of the user contract, the user information, the specification of the user ID and password which are used for authentication, etc. It is also possible to make the user ID into the telephone number of the mobile telephone 401. It is possible to either exclude or constitute a password.

The demand of the user information transmits a predetermined page etc. to the mobile telephone 401, and is realized by requiring as making a predetermined matter input into this.

Moreover, the user terminal 400 transmits the user information given into this predetermined page to the digest transmission server 302 (Y3 →D3).

Thus, the digest transmission server 302 which received user information checks user information (D4), creates a new record in the favorite data database 312 classified by user, and registers this user information (D5).

Then, the digest transmission server 302 transmits all items (the contents of a contract etc.) over specification of the contract included in user information to a mobile telephone 401 (D6 →Y4), and makes the contents of a contract check to the user terminal 400.

If the contents of a contract are checked in the user terminal 400 (Y5), what the mobile telephone 401 checked (notice of a check) will be transmitted to the digest transmission server 302 (Y6 →D7).

Next, the digest transmission server 302 which received this notice of a check transmits a favorite data registration screen (view 9) to a mobile telephone 401 (D8 →Y7).

On the other hand, based on the favorite data registration screen displayed on the mobile telephone 401, the user terminal 400 inputs specification of a genre, divisional selection, selection of a keyword, etc. (favorite data) (Y8), and transmits this to the digest transmission server 302 (Y9 →D9).

Thus, the digest transmission server 302 which received favorite data stores the received favorite data as an item of the favorite data in the record created by the above D5 (D10).

Thereby, in the digest creation office 300, registration and management of the favorite data received from the user 400 are done.

### (4) Digest Creation Procedure

Next, according to the demand from the user terminal 400, a digest is created and operation at the time of distributing this will be explained below.

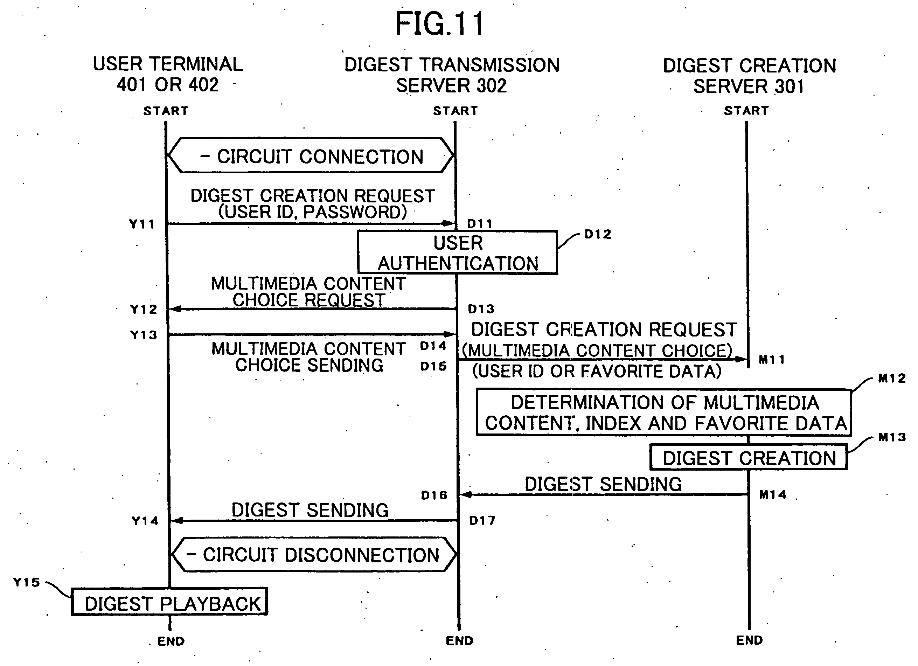

FIG. 11 is a diagram for the sequence of operations of the digest creation and distribution procedure performed by the first preferred embodiment of the digest transmission system.

However, the above operation is performed when distribution of a digest is required of the digest transmission server 302 from a mobile telephone 401.

As shown in FIG. 11, in the above operation, the mobile telephone 401 and the digest transmission server 302 establish circuit connection. Then, the mobile telephone 401 requires a digest from the digest transmission server 311 (Y11 →D11).

Under the present circumstances, from the mobile telephone 401, a password is also transmitted if needed.

Moreover, the digest transmission server 311 detects a user ID at the time of the establishment of circuit connection.

If the digest transmission server 302 receives the demand of the digest, the user 400 is attested (D12) and authentication will be established, specification of the multimedia content will be required of the mobile telephone 401 (D13 →Y12).

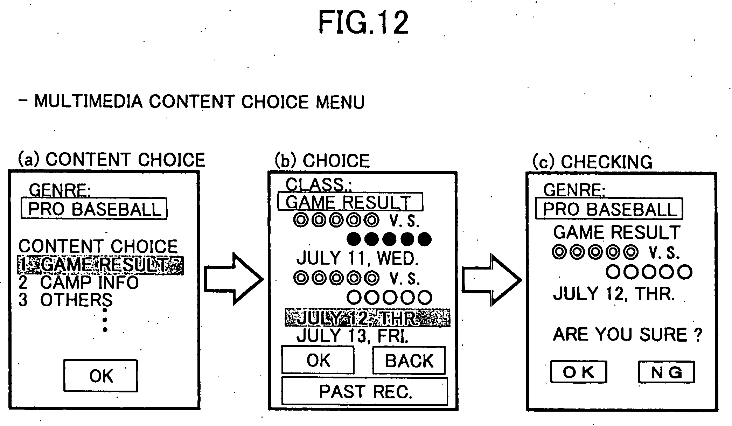

Under the present circumstances, it is good to constitute so that the digest transmission server 302 may make a multimedia content specify based on a screen (multimedia content appointed screen) which is illustrated to FIG. 12.

FIG. 12 shows an example of the multimedia content choice menu used by the first preferred embodiment of the digest transmission system. The screen of the menu in FIG. 12 is created based on the favorite data registered from the user 400.

That is, when the demand of the digest is received from the user terminal 400, the digest transmission server 302 specifies favorite data after establishing the user authentication with reference to the favorite data database 312, and specifies the multimedia contents and the index which suit the favorite data from the multimedia content database 311 based on the favorite data.

Based on the multimedia contents and index that are specified, the screen considered to be the optimal in each genre is created, and this is offered to a mobile telephone 401. As for creation of the screen, it is good to constitute so that the information on the multimedia contents specified as the predetermined position of the source document beforehand prepared for every genre and an index may be stored.

Moreover, when the user's authentication is not established in D12, as for the digest transmission server 302, it is good to constitute so that this may be notified to the mobile telephone 401, and the disconnection may occur or authentication information (password) may be required again.

Moreover, after establishing user authentication, the user 400 of whom specification of the multimedia content is required inputs a predetermined matter (specification of the multimedia content) into the multimedia content designation screen, and transmits this to the digest transmission server 302 (Y13 →D14).

The digest transmission server 302 which receives the specification of the multimedia content transmits the specification and the user ID (or favorite data) of the multimedia content to the digest creation server 301 (D15 →M11).

If the specification and the user ID (or favorite data) of the multimedia content are received, in the case where the user ID is received, the digest creation server 301 specifies the favorite data on the user ID, and specifies the multimedia content and the index based on the specification of the multimedia content (M12).

Then, a digest is created based on the multimedia content, index, and favorite data which are specified (M13).

Thus, the digest creation server 301 transmits the created digest to the digest transmission server 302 (M14 →D16), and the digest transmission server 302 transmits the same to the mobile telephone 401 (D17 → Y14).

Then, a disconnection between the mobile telephone 401 and the digest transmission server 302 occurs, and the digest received in the mobile telephone 401 is reproduced (Y15).

The mobile telephone 401 in the present embodiment or the operation of each server can be realized by executing the program that causes a computer to execute each processing. This program is stored in a computer readable storage medium, such as a hard disk of a computer. Moreover, the program as which the index creation terminal 201 and each server in the present embodiment are operated may be stored in a removable medium, such as CD-R and FD.

In the present embodiment, in order to cut down the amount of processings which the digest creation server 301 takes at the time of digest creation, it is preferred that the digest created at once may be stored in a cache memory during the predetermined period.

### (Billing in First Preferred Embodiment)

It is also possible that the digest creation office 300 is configured to carry out the charging to the user who uses the service (which will be called the digest distribution service) which distributes the digest to the user's mobile telephone in the present embodiment.

As this billing method, it is possible to charge the user at given intervals such as a daily basis, weekly basis, monthly basis, yearly basis, or a specific day when a sports league match is held. It is also possible to charge the user every time the user uses the digest distribution service (the download of a digest).

Moreover, when using multimedia contents, such as a program provided with the digest creation office 300 from the program creation office 100, or in case the index offered from the index creation office 200 is used, it may be constituted so that a predetermined frame charge may be paid to the program creation office 100 or the index creation office 200.

However, it is not such limitations when the digest creation office 200 and the program creation office 100 are included in the same company as the digest creation office 300 etc.

Moreover, apart from the above, it is possible to include an advertisement in a digest and it is also possible to make the charge concerning the user terminal 400 into a cut or no charge. Like banner advertising, in case this reproduces a digest, it can consider how to also display an advertisement simultaneously, the method of making the charge of the user who registered as an object of the advertisement by e-mails, such as direct-mail advertising, a cut or no charge, etc.

However, from the side (advertiser) which offers these advertisements, the predetermined charge of advertising vicarious execution is paid to the digest creation office 300.

Moreover, it not only makes a registration user's charge into a cut or no charge, but by the method of registering as an object of the advertisement by the e-mail, how to make download of one digest no charge etc. is considered in receiving one E-mail advertisement. In this case, it is also possible to also constitute so that an advertiser may pay the predetermined charge of advertising vicarious execution to a digest transmission office to one distribution of direct-mail advertising, and to constitute by making a predetermined period into a unit, so that a predetermined advertising rate may be paid.

### Second Preferred Embodiment

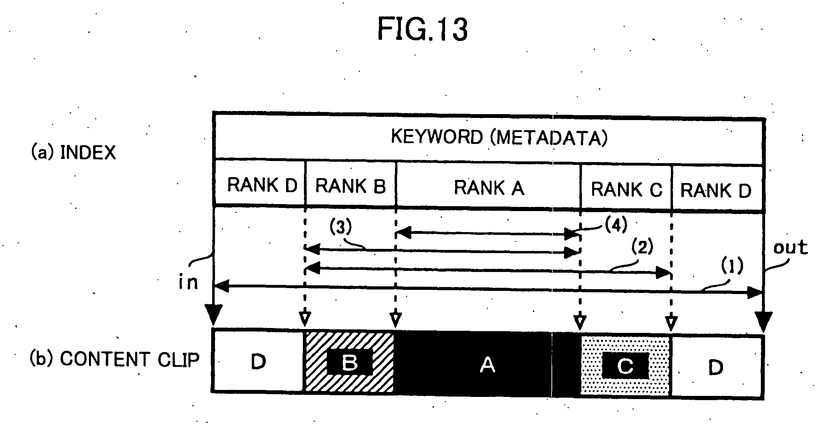

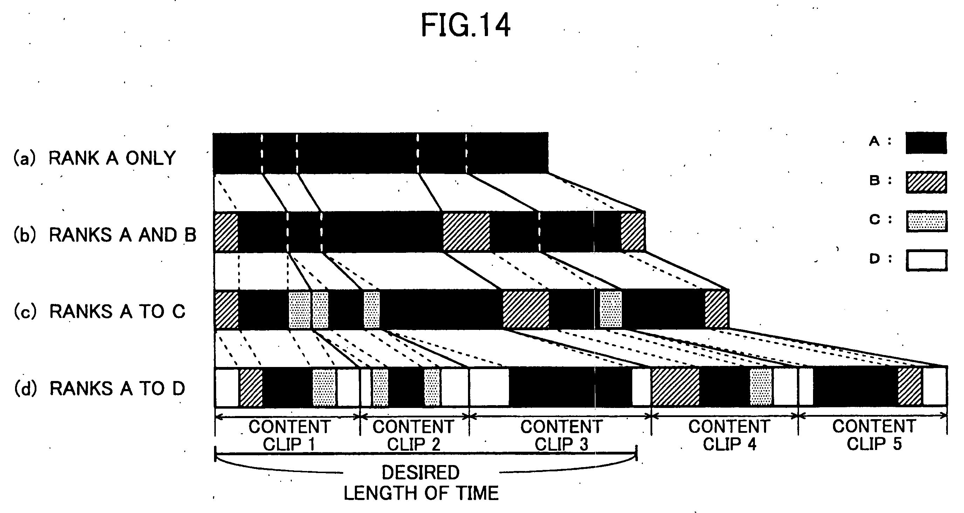

Next, a description will be given of the second preferred embodiment of the present invention with reference to FIG. 13 and FIG. 14.

In the present embodiment, the digest transmission system of the first preferred embodiment is configured such that a part of one or more scenes with low significance ranks are eliminated and the digest is created so that the length of time of the created digest is nearest to a desired length of time.

In realizing the above composition, the digest transmission system of the present embodiment is configured so that the content clips are divided using the "IN" command and the "OUT" command contained in the index, and they are further divided according to the rank of significance for the scene concerned

FIG. 13 shows the relationship between the index and the content clip in a digest transmission system of the second preferred embodiment of the invention.

As shown in FIG. 13, the content clips are divided using the "IN" command and the "OUT" command contained in the index, and they are further divided according to the rank of significance for the scene concerned. In the present embodiment, the ranks A to D of significance are provided, and A is the highest rank and D is the lowest rank.

The assignment of significance ranks to such content clips is performed by the index creation terminal 201 in the index creation office 200. Moreover, in order to support the assignment of significance ranks, it is preferred that the index creation support menu of FIG. 8 displayed on the index creation terminal 201 is modified to provide the user with the area where the ranks of significance are input. This is realized by displaying the ranks of significance formed by the GUI, etc. which are indicated as the selections on the input unit 215.

In the step M11 of FIG. 11, when the time length of the created digest is longer than the desired time length, the digest creation server 301 does not include a portion of the multimedia content data with low significance ranks for each content clip, and it operates to create the digest such that the time length of the created digest is nearest to the desired time length.

FIG. 14 shows the relationship between the desired time length and the time lengths of respective content clips with significance ranks for the digest that is created in the second preferred embodiment of the digest transmission system.

As shown in FIG. 14, it is assumed that there are the content clips 1 to 5 which are adapted for the favorite data of the user terminal 400, and that the desired length of time for the digest is given as shown in FIG. 14.

The digest creation server 301 computes the respective time lengths of the digest created for every significance by using these content clips, as follows.

The time length of the digest created including the content clips with the ranks A to D is the largest as indicated in (d) of FIG. 14). The time length of the digest created including the content clips with the ranks A to C is the second largest, as indicated in (c) of FIG. 14 (in this case, the content clips with the lowest rank D are eliminated). The time length of the digest created including the content clips with the ranks A and B is the third largest as indicated in (b) of FIG. 14 (in this case, the content clips with the low ranks C and D are eliminated). The time length of the digest created including the content clips with the rank A only is the smallest as indicated in (a) of FIG. 14 (in this case, the content clips with the low ranks B, C and D are eliminated). The digest creation server 301 determines that the time length of the digest created including the content clips with the ranks A and B is nearest to the desired time length, and that the digest should be created with the content clips with the ranks A and B.

Accordingly, in the example of FIG. 14, the digest is created such that it includes the content clips with the significance ranks A and B. The time length of the digest created in such a case is nearest to the desired time length.

As for the matters other than those described above, the corresponding elements of the first preferred embodiment may be applicable to the second preferred embodiment, and a description thereof will be omitted.

In the above-described embodiment, the scenes with low significance ranks are eliminated and the digest is created such that the time length of the created digest is nearest to the desired time length. Alternatively, it is also possible to modify the above-described embodiment so that the scenes with low significance ranks are eliminated and the digest is created such that the time length of the created digest is below the desired time length.

The digest transmission system of the present embodiment is capable of controlling the time length of the created digest, and it is possible to provide the user with the amount of data transmitted that is reduced as small as possible if needed.

### Third Preferred Embodiment

Next, a description will be will be given of the third preferred embodiment of the present invention.

In the present embodiment, the digest transmission system of the first preferred embodiment is configured such that, when the user terminal 400 downloads a digest from the digest transmission system, the user terminal sends the favorite data to the digest transmission system.

In the present embodiment, the items of the favorite data on the user-specific favorite data database 312 in the first preferred embodiment are omitted, and the favorite data registration procedure is modified so as to include only the steps Y1-Y6 and D1-D7 of FIG. 10. Moreover, in the steps of D13 → Y12 and Y13 → D14 in the digest creation (distribution) procedure, the steps Y7-Y9 and D8-D9 in FIG. 10 are also performed.

In the present embodiment, the favorite data is sent from the user terminal to the digest transmission system just before the time of the download of a digest. It is possible for the digest transmission system of the present embodiment to transmit the digest created according to the user's current favorite.

### Fourth Preferred Embodiment

Next, a description will be given of the fourth preferred embodiment of the present invention.

In the present embodiment, the digest transmission system of the first preferred embodiment is configured such that, when the multimedia contents are being broadcasted from the program creation office 100, the index is assigned to the multimedia contents one by one and the digest is created with the content clips and transmitted to the user terminal 400.

The present embodiment is effective to a digest with which the demand from the user terminal 400 occurs at a large number of times. However, it is necessary that the digest creation office 300 registers, in advance, the user-specific favorite data for creating this digest into the storage unit thereof.

In the present embodiment, with respect to the broadcast multimedia content, an index is created one by one in the index creation office 200, and it is transmitted to the multimedia content database 311 in the digest creation office 300. Moreover, in the digest creation office 300, the multimedia content currently broadcast is stored in the multimedia content database 311 one by one.

The index which is received from the index creation office 200 is also stored into the multimedia content database 311 of the digest creation office 300 one by one. Moreover, based on the multimedia content under broadcast, the index and the favorite data are beforehand registered into the digest creation server 301, the digest creation office 300 of the present embodiment creates a content clip one by one, and combines them one by one.

It is preferred that the digest transmission system of the present embodiment is configured so that the incomplete digest created based on the index that is already received may be stored in the cache memory of the digest creation server 301.

Moreover, it is also possible that the incomplete digest created in this way is stored so that it may be transmitted to the user terminal 400. This digest is transmitted as a digest indicative of a result in the middle of an event. For example, it is possible that the digest transmission system of the present embodiment to transmit the digest indicative of a result in the middle of the game of professional baseball, professional soccer, etc. in order to provide the user terminal 400 with such result promptly.

As described in the foregoing, according to the present invention, it is possible to provide the user with the collected data of multimedia contents suited to the demand of the user. The above-described embodiments have been described such that a digest is distributed according to the demand from a user, namely, the pull type distribution system. Alternatively, the digest transmission system of the present invention may be configured as the push type distribution system. In such alternative embodiment, it is preferred that a digest is distributed at a predetermined time (for example, it is registered as the favorite data).

The present invention is not limited to the above-described embodiments, and variations and modifications may be made without departing from the scope of the present invention as defined in the appended claims. For example, the present invention can be carried out with any other system if it is capable of providing the user with the collected data of multimedia contents suited to the demand of the user.

## Claims

1. A digest transmission system for mobile telephones, comprising:
an index creation unit (217) for creating an index which is assigned to multimedia content data;
a scene extraction unit for extracting content clips from the multimedia content data with the index, in response to an input keyword corresponding to the index;
a digest creation unit (301) for creating a digest based on said content clips extracted by the scene extraction unit; and
a digest transmitting unit (302) for transmitting the digest created by the digest creation unit through a communication network (1);
said index creation unit (20; 200) further comprising a significance rank assigning unit adapted to place, into the index, ranks of significance for portions of the content clips,
**characterized in that** said digest creation unit (300) is configured, when the time length of the created digest is longer than a desired time length,
a) to calculate the respective time lengths of respective candidate digests comprising content clips, wherein said calculation is performed for different respective significances such that the content clips of the respective candidate digests include only the portions having a rank higher or equal to the respective significance, and
b) to transmit, to a mobile phone (401), the candidate digest having a calculated time length which is nearest to or below the desired time length.

2. The digest transmission system of claim 1, further comprising a keyword receiving unit adapted to receive the input keyword from the mobile telephone through the communication network.

3. The digest transmission system of claim 1, **characterized in that** the scene extraction unit is configured to extract one or more content clips from the multimedia content data when a digest distribution request is received from the mobile telephone.

4. The digest transmission system of claim 1, comprising an index creation terminal (200) comprising:
an index candidate storing unit storing candidates of an index for multimedia content data;
a multimedia content playback unit (212) reproducing the multimedia content data;
an index candidate display unit reading the index candidates from the index candidate storing unit and displaying a list of the index candidates on a display; and
the index creating unit (217) creating the index, which is assigned to the content clips scenes including a portion of the multimedia content data reproduced by the playback unit, based on index candidates chosen from-the list displayed by the index candidate display unit.

5. The digest transmission system of claim 4, wherein the index creation terminal comprises:
a playback portion display unit displaying the portion of the multimedia content data currently reproduced by the playback unit, on a time axis that is indicative of a time length of the multimedia content data;
a scene display unit displaying the one or more scenes to which the index is assigned, based on the time axis; and
an index display unit displaying the index assigned to the one or more scenes including the portion of the multimedia content data reproduced by the playback unit,
wherein the portion of the multimedia content data reproduced by the playback unit is varied based on the portion of the multimedia content data displayed by the playback portion display unit.

6. The digest transmission system of claim 1, further comprising a mobile telephone which receives the digest through the communication network from the digest transmission server (302), comprising:
a favorite data transmitting unit transmitting the input keyword to the digest transmission server (302) as favorite data;
a digest receiving unit receiving through the communication network (1) the digest from the digest transmission server (302) in response to the favorite data; and
a digest playback unit reproducing the digest received by the digest receiving unit.

7. The digest transmission system of claim 1, further comprising a mobile telephone which transmits favorite data through a communication network to the digest transmission server (302) in which the digest is created by extracting the content clips from multimedia content data with the index assigned, in response to the favorite data, comprising:
a keyword list receiving unit receiving a list of keywords through the communication network (1) from the digest transmission server (302), the favorite data containing one or more keywords chosen from the keyword list;
a keyword list displaying unit displaying the received keyword list on a display; and
a favorite data transmitting unit transmitting said one or more keywords chosen from the displayed keyword list, to the digest transmission server (302) as the favorite data.

8. The digest transmission system of claim 7, **characterized in that** the keywords in the keyword list are classified according to genres of the multimedia content data, and that the keyword list receiving unit is configured such that the mobile telephone transmits a selected genre to the digest transmission system and receives the keyword list corresponding to the selected genre from the digest transmission system.

9. A digest transmission method for mobile telephones, comprising the steps of:
creating an index which is assigned to multimedia content data;
extracting content clips from the multimedia content data with the index, in response to an input keyword corresponding to the index;
creating a digest based on the extracted content clips; and
transmitting the created digest through a communication network (1);
whereby ranks of significance for portions of the content clips are placed into the index,
**characterized in that**, when the time length of the created digest is longer than a desired time length, the respective time lengths of respective candidate digests comprising content clips are calculated, wherein said calculation is performed for different respective significances such that the content clips of the respective candidate digests include only the portions having a rank higher or equal to the respective significance, and **in that**
the candidate digest having a calculated time length which is nearest to or below the desired time length is transmitted to a mobile phone (401).

10. The digest transmission method of claim 9, **characterized in** further comprising the step of receiving the input keyword from the mobile telephone through the communication network.

11. The digest transmission method of claim 9, wherein the input keywords are favorite data and the favorite data are transmitted through a communication network by a mobile phone to a digest transmission server further comprising the steps of:
receiving a list of keywords through the communication network from the digest transmission server by the mobile phone, the favorite data containing one or more keywords chosen from the keyword list;
displaying the received keyword list on a display of the mobile phone; and
transmitting said one or more keywords chosen from the displayed keyword list, to the digest transmission server as the favorite data.

12. The digest transmission method of claim 11, wherein the keywords in the keyword list are classified according to genres of the multimedia content data, and that the keyword list receiving step is configured such that the mobile telephone transmits a selected genre to the digest transmission server and receives the keyword list corresponding to the selected genre from the digest transmission server.

13. A computer-readable storage medium storing program code for causing a computer to execute the method of one of claims 9 to 12.

## Patentansprüche

1. Zusammenfassungsinformation-Übertragungssystem für Mobiltelephone, das umfasst:
eine Index-Erzeugungseinheit (217), um einen Index zu erzeugen, der Multimedia-Inhaltsdaten zugewiesen wird;
eine Szene-Extraktionseinheit, um in Reaktion auf ein eingegebenes Schlüsselwort, das dem Index entspricht, Inhalts-Clips aus den Multimedia-Inhaltsdaten mit dem Index zu extrahieren;
eine Zusammenfassungsinformation-Erzeugungseinheit (301), um Zusammenfassungsinformationen anhand der durch die Szene-Extraktionseinheit extrahierten Inhalts-Clips zu erzeugen; und
eine Zusammenfassungsinformation-Übertragungseinheit (302), um die durch die Zusammenfassungsinformation-Erzeugungseinheit erzeugten Zusammenfassungsinformationen über ein Kommunikationsnetz (1) zu übertragen;
wobei die Index-Erzeugungseinheit (20; 200) ferner eine Signifikanzrang-Zuweisungseinheit umfasst, die so beschaffen ist, dass sie in den Index Signifikanzränge für Teile der Inhalts-Clips einsetzt,
**dadurch gekennzeichnet, dass** die Zusammenfassungsinformation-Erzeugungseinheit (300) so konfiguriert ist, dass sie dann, wenn die Zeitdauer der erzeugten Zusammenfassungsinformationen länger als eine gewünschte Zeitdauer ist,
a) die entsprechenden Zeitdauern entsprechender Kandidaten-Zusammenfassungsinformationen, die Inhalts-Clips enthalten, berechnet, wobei die Berechnung für unterschiedliche entsprechende Signifikanzen ausgeführt wird, derart, dass die Inhalts-Clips der entsprechenden Kandidaten-Zusammenfassungsinformationen nur jene Teile enthalten, die einen Rang besitzen, der gleich oder höher als die entsprechende Signifikanz ist, und
b) an ein Mobiltelephon (401) die Kandidaten-Zusammenfassungsinformationen überträgt, die eine berechnete Zeitdauer haben, die der gewünschten Zeitdauer am nächsten kommt oder kürzer ist.

2. Zusammenfassungsinformation-Übertragungssystem nach Anspruch 1, das ferner eine Schlüsselwort-Empfangseinheit aufweist, die das eingegebene Schlüsselwort von dem Mobiltelephon über das Kommunikationsnetz empfängt.

3. Zusammenfassungsinformation-Übertragungssystem nach Anspruch 1, **dadurch gekennzeichnet, dass** die Szene-Extraktionseinheit so konfiguriert ist, dass sie einen oder mehrere Inhalts-Clips aus den Multimedia-Inhaltsdaten extrahiert, wenn eine Zusammenfassungsinformation-Verteilungsanforderung von dem Mobiltelephon empfangen wird.

4. Zusammenfassungsinformation-Übertragungssystem nach Anspruch 1, das ein Indexerzeugungs-Endgerät (200) umfasst, das umfasst:
eine Indexkandidaten-Speichereinheit, die Kandidaten eines Index für Multimedia-Inhaltsdaten speichert;
eine Multimediainhalt-Wiedergabeeinheit (212), die die Multimedialnhaltsdaten wiedergibt;
eine Indexkandidaten-Anzeigeeinheit, die die Indexkandidaten aus der Indexkandidaten-Speichereinheit liest und eine Liste der Indexkandidaten auf einer Anzeige anzeigt; und
die Indexerzeugungseinheit (217) den Index, der den Inhalts-Clip-Szenen zugewiesen ist, die einen Teil der Multimedia-Inhaltsdaten enthalten, die durch die Wiedergabeeinheit wiedergegeben werden, anhand von Indexkandidaten, die aus der von der Indexkandidaten-Anzeigeeinheit angezeigten Liste ausgewählt sind, erzeugt.

5. Zusammenfassungsinformation-Übertragungssystem nach Anspruch 4, bei dem das Indexerzeugungs-Endgerät umfasst:
eine Wiedergabeteil-Anzeigeeinheit, die den Teil der Multimedia-Inhaltsdaten, die momentan von der Wiedergabeeinheit wiedergegeben werden, auf einer Zeitachse anzeigt, die eine Zeitlänge der Multimedia-Inhaltsdaten angibt;
eine Szene-Anzeigeeinheit, die anhand der Zeitachse die eine oder die mehreren Szenen, denen der Index zugewiesen ist, anzeigt; und
eine Indexanzeigeeinheit, die den Index anzeigt, der der einen oder den mehreren Szenen zugewiesen ist, die den Teil der Multimedia-Inhaltsdaten enthalten, der durch die Wiedergabeeinheit wiedergegeben wird,
wobei der Teil der Multimedia-Inhaltsdaten, der durch die Wiedergabeeinheit wiedergegeben wird, anhand des Teils der Multimedia-Inhaltsdaten, der durch die Wiedergabeteil-Anzeigeeinheit angezeigt wird, verändert wird.

6. Zusammenfassungsinformation-Übertragungssystem nach Anspruch 1, das ferner ein Mobiltelephon umfasst, das die Zusammenfassungsinformationen über das Kommunikationsnetz von dem Zusammenfassungsinformation-Übertragungsserver (302) empfängt, das umfasst:
eine Favoritendaten-Übertragungseinheit, die das eingegebene Schlüsselwort an den Zusammenfassungsinformation-Übertragungsserver (302) als Favoritendaten überträgt;
eine Zusammenfassungsinformation-Empfangseinheit, die in Reaktion auf die Favoritendaten über das Kommunikationsnetz (1) die Zusammenfassungsinformationen von dem Zusammenfassungsinformation-Übertragungsserver (302) empfängt; und
eine Zusammenfassungsinformation-Wiedergabeeinheit, die die von der Zusammenfassungsinformation-Empfangseinheit empfangenen Zusammenfassungsinformationen wiedergibt.

7. Zusammenfassungsinformation-Übertragungssystem nach Anspruch 1, das ferner ein Mobiltelephon umfasst, das Favoritendaten über ein Kommunikationsnetz an den Zusammenfassungsinformation-Übertragungsserver (302) überträgt, indem in Reaktion auf die Favoritendaten die Zusammenfassungsinformationen durch Extrahieren der Inhalts-Clips aus den Multimedia-Inhaltsdaten mit dem zugewiesenen Index erzeugt werden, das umfasst:
eine Schlüsselwortlisten-Empfangseinheit, die eine Liste von Schlüsselwörtern über das Kommunikationsnetz (1) von dem Zusammenfassungsinformation-Übertragungsserver (302) empfängt, wobei die Favoritendaten ein oder mehrere Schlüsselwörter, die aus der Schlüsselwortliste gewählt sind, enthalten;
eine Schlüsselwortlisten-Anzeigeeinheit, die die empfangene Schlüsselwortliste auf eine Anzeige anzeigt; und
eine Favoritendaten-Übertragungseinheit, die das eine oder die mehreren Schlüsselwörter, die aus der angezeigten Schlüsselwortliste ausgewählt sind, an den Zusammenfassungsinformation-Übertragungsserver (302) als die Favoritendaten überträgt.

8. Zusammenfassungsinformation-Übertragungssystem nach Anspruch 7, **dadurch gekennzeichnet, dass** die Schlüsselwörter in der Schlüsselwortliste entsprechend den Genres der Multimedia-Inhaltsdaten klassifiziert sind und dass die Schlüsselwortlisten-Empfangseinheit so konfiguriert ist, dass das Mobiltelephon ein ausgewählte Genre an das Zusammenfassungsinformation-Übertragungssystem überträgt und die Schlüsselwortliste, die dem ausgewählten Genre entspricht, von dem Zusammenfassungsinformation-Übertragungssystem empfängt.

9. Zusammenfassungsinformation-Übertragungsverfahren für Mobiltelephone, das die folgenden Schritte umfasst:
Erzeugen eines Indexes, der Multimedia-Inhaltsdaten zugewiesen wird;
Extrahieren von Inhalts-Clips aus den Multimedia-Inhaltsdaten mit dem Index in Reaktion auf ein dem Index entsprechendes eingegebenes Schlüsselwort;
Erzeugen von Zusammenfassungsinformationen anhand der extrahierten Inhalts-Clips; und
Übertragen der erzeugten Zusammenfassungsinformationen über ein Kommunikationsnetz (1);
wobei Signifikanzränge für Teile der Inhalts-Clips in den Index eingesetzt werden,
**dadurch gekennzeichnet, dass** dann, wenn die Zeitdauer der erzeugten Zusammenfassungsinformationen länger ist als eine gewünschte Zeitdauer, die entsprechenden Zeitdauern entsprechender Kandidaten-Zusammenfassungsinformationen, die Inhalts-Clips enthalten, berechnet werden, wobei die Berechnung für unterschiedliche entsprechende Signifikanzen ausgeführt wird, derart, dass die Inhalts-Clips der entsprechenden Kandidaten-Zusammenfassungsinformationen nur Teile enthalten, deren Rang gleich oder höher als die entsprechende Signifikanz ist, und dass
die Kandidaten-Zusammenfassungsinformationen, die eine berechnete Zeitdauer haben, die der gewünschten Zeitdauer am nächsten kommt oder kürzer ist, an ein Mobiltelephon (401) übertragen wird.

10. Zusammenfassungsinformation-Übertragungsverfahren nach Anspruch 9, **dadurch gekennzeichnet, dass** es ferner den Schritt umfasst, bei dem das eingegebene Schlüsselwort von dem Mobiltelephon über das Kommunikationsnetz empfangen wird.

11. Zusammenfassungsinformation-Übertragungsverfahren nach Anspruch 9, bei dem die eingegebenen Schlüsselwörter Favoritendaten sind und die Favoritendaten über ein Kommunikationsnetz durch ein Mobiltelephon an einen Zusammenfassungs-Übertragungsserver übertragen werden, wobei das Verfahren die folgenden Schritte umfasst:
Empfangen einer Liste von Schlüsselwörtern über das Kommunikationsnetz von dem Zusammenfassungsinformation-Übertragungsserver durch das Mobiltelephon, wobei die Favoritendaten ein oder mehrere Schlüsselwörter enthalten, die aus der Schlüsselwortliste ausgewählt sind;
Anzeigen der empfangenen Schlüsselwortliste auf einer Anzeige des Mobiltelephons; und
Übertragen des einen oder der mehreren Schlüsselwörter, die aus der angezeigten Schlüsselwortliste ausgewählt werden, an den Zusammenfassungsinformation-Übertragungsserver als die Favoritendaten.

12. Zusammenfassungsinformation-Übertragungsverfahren nach Anspruch 11, bei dem die Schlüsselwörter in der Schlüsselwortliste in Übereinstimmung mit Genres der Multimedia-Inhaltsdaten klassifiziert werden, wobei der Schlüsselwortlisten-Empfangsschritt so konfiguriert ist, dass das Mobiltelephon ein ausgewähltes Genre an den Zusammenfassungsinformation-Übertragungsserver überträgt und die Schlüsselwortliste, die dem ausgewählten Genre entspricht, von dem Zusammenfassungsinformation-Übertragungsserver empfängt.

13. Computerlesbares Speichermedium, das Programmcode speichert, der einen Computer dazu veranlasst, das Verfahren nach einem der Ansprüche 9 bis 12 auszuführen.

## Revendications

1. Système de transmission de résumé pour des téléphones mobiles, comprenant :
une unité de création d'index (217) pour créer un index qui est assigné à des données de contenu multimédia ;
une unité d'extraction de scène pour extraire des extraits de contenu à partir des données de contenu multimédia avec l'index, en réponse à un mot clé d'entrée correspondant à l'index ;
une unité de création de résumé (301) pour créer un résumé sur la base desdits extraits de contenu extraits par l'unité d'extraction de scène ; et
une unité de transmission de résumé (302) pour transmettre le résumé qui est créé par l'unité de création de résumé par l'intermédiaire d'un réseau de communication (1),
ladite unité de création d'index (20 ; 200) comprenant en outre une unité d'assignation de rang de signification qui est adaptée pour placer, dans l'index, des rangs de signification pour des parties des extraits de contenu, **caractérisé en ce que** ladite unité de création de résumé (300) est configurée pour, lorsque la durée temporelle du résumé créé est plus longue qu'une durée temporelle souhaitée,
a) calculer les durées temporelles respectives de résumés de candidat respectifs comprenant des extraits de contenu, où ledit calcul est réalisé pour différentes significations respectives de telle sorte que les extraits de contenu des résumés de candidat respectifs incluent seulement les parties présentant un rang supérieur ou égal à la signification respective ; et
b) transmettre, sur un téléphone mobile (401), le résumé de candidat présentant une durée temporelle calculée qui est la plus proche de la durée temporelle souhaitée ou au dessous.

2. Système de transmission de résumé selon la revendication 1, comprenant en outre une unité de réception de mot clé qui est adaptée pour recevoir le mot clé d'entrée en provenance du téléphone mobile par l'intermédiaire du réseau de communication.

3. Système de transmission de résumé selon la revendication 1, **caractérisé en ce que** l'unité d'extraction de scène est configurée pour extraire un ou plusieurs extraits de contenu à partir des données de contenu multimédia lorsqu'une requête de distribution de résumé est reçue depuis le téléphone mobile.

4. Système de transmission de résumé selon la revendication 1, comprenant un terminal de création d'index (200) comprenant :
une unité de stockage de candidats d'index qui stocke des candidats d'un index pour des données de contenu multimédia ;
une unité de lecture de contenu multimédia (212) qui reproduit les données de contenu multimédia ;
une unité d'affichage de candidats d'index qui lit les candidats d'index à partir de l'unité de stockage de candidats d'index et qui affiche une liste des candidats d'index sur un affichage, et
l'unité de création d'index (217) créant l'index, qui est assigné aux scènes d'extraits de contenu incluant une partie des données de contenu multimédia reproduites par l'unité de lecture, sur la base de candidats d'index choisis parmi la liste affichée par l'unité d'affichage de candidats d'index.

5. Système de transmission de résumé selon la revendication 4, dans lequel le terminal de création d'index comprend :
une unité d'affichage de partie de lecture qui affiche la partie des données de contenu multimédia présentement reproduites par l'unité de lecture sur un axe temporel qui est indicatif d'une durée temporelle des données de contenu multimédia ;
une unité d'affichage de scènes qui affiche les une ou plusieurs scènes à laquelle/auxquelles l'index est assigné, sur la base de l'axe temporel ; et
une unité d'affichage d'index qui affiche l'index qui est assigné aux une ou plusieurs scènes incluant la partie des données de contenu multimédia reproduites par l'unité de lecture,
dans lequel la partie des données de contenu multimédia reproduites par l'unité de lecture est modifiée sur la base de la partie des données de contenu multimédia affichée par l'unité d'affichage de partie de lecture.

6. Système de transmission de résumé selon la revendication 1, comprenant en outre un téléphone mobile qui reçoit le résumé par l'intermédiaire du réseau de communication depuis le serveur de transmission de résumé (302), comprenant :
une unité de transmission de données favorites transmettant le mot clé d'entrée au serveur de transmission de résumé (302) en tant que données favorites ;
une unité de réception de résumé qui reçoit, par l'intermédiaire du réseau de communication (1), le résumé en provenance du serveur de transmission de résumé (302) en réponse aux données favorites ; et
une unité de lecture de résumé qui reproduit le résumé qui est reçu par l'unité de réception de résumé.

7. Système de transmission de résumé selon la revendication 1, comprenant en outre un téléphone mobile qui transmet des données favorites par l'intermédiaire d'un réseau de communication au serveur de transmission de résumé (302) où le résumé est créé en extrayant les extraits de contenu à partir des données de contenu multimédia avec l'index assigné, en réponse aux données favorites, comprenant :
une unité de réception de liste de mots clés qui reçoit une liste de mots clés par l'intermédiaire du réseau de communication (1) depuis le serveur de transmission de résumé (302), les données favorites contenant un ou plusieurs mots clés choisis parmi la liste de mots clés ;
une unité d'affichage de liste de mots clés qui affiche la liste de mots clés reçue sur un affichage ; et
une unité de transmission de données favorites qui transmet lesdits un ou plusieurs mots clés choisis parmi la liste de mots clés affichée au serveur de transmission de résumé (302) en tant que données favorites.

8. Système de transmission de résumé selon la revendication 7, **caractérisé en ce que** les mots clés dans la liste de mots clés sont classifiés conformément à des genres des données de contenu multimédia et **en ce que** l'unité de réception de liste de mots clés est configurée de telle sorte que le téléphone mobile transmette un genre sélectionné au système de transmission de résumé et reçoive la liste de mots clés correspondant au genre sélectionné depuis le système de transmission de résumé.

9. Procédé de transmission de résumé pour des téléphones mobiles, comprenant les étapes de :
création d'un index qui est assigné à des données de contenu multimédia ;
extraction d'extraits de contenu à partir des données de contenu multimédia avec l'index, en réponse à un mot clé d'entrée qui correspond à l'index ;
création d'un résumé sur la base des extraits de contenu extraits ; et
transmission du résumé créé par l'intermédiaire d'un réseau de communication (1),
et ainsi, des rangs de signification pour des parties des extraits de contenu sont placés dans l'index, **caractérisé en ce que**, lorsque la durée temporelle du résumé créé est plus longue qu'une durée temporelle souhaitée, les durées temporelles respectives de résumés de candidat respectifs comprenant des extraits de contenu sont calculées, dans lequel ledit calcul est réalisé pour différentes significations respectives de telle sorte que les extraits de contenu des résumés de candidat respectifs incluent seulement les parties présentant un rang supérieur ou égal à la signification respective ; et
le résumé de candidat présentant une durée temporelle calculée qui est la plus proche de la durée temporelle souhaitée ou au-dessous est transmis à un téléphone mobile (401).

10. Procédé de transmission de résumé selon la revendication 9, **caractérisé en ce qu'**il comprend en outre l'étape de réception du mot clé d'entrée depuis le téléphone mobile par l'intermédiaire du réseau de communication.

11. Procédé de transmission selon la revendication 9, dans lequel les mots clés d'entrée sont des données favorites et les données favorites sont transmises par l'intermédiaire d'un réseau de communication au moyen d'un téléphone mobile sur un serveur de transmission de résumé, comprenant en outre les étapes de :
réception d'une liste de mots clés par l'intermédiaire du réseau de communication depuis le serveur de transmission de résumé au moyen du téléphone mobile, les données favorites contenant un ou plusieurs mots clés choisis parmi la liste de mots clés ;
affichage de la liste de mots clés reçue sur un affichage du téléphone mobile ; et
transmission desdits un ou plusieurs mots clés choisis parmi la liste de mots clés affichée au serveur de transmission de résumé en tant que données favorites.

12. Procédé de transmission de résumé selon la revendication 11, dans lequel les mots clés dans la liste de mots clés sont classifiés conformément à des genres des données de contenu multimédia et l'étape de réception de liste de mots clés est configurée de telle sorte que le téléphone mobile transmette un genre sélectionné au serveur de transmission de résumé et reçoive la liste de mots clés correspondant au genre sélectionné depuis le serveur de transmission de résumé.

13. Support de stockage lisible par ordinateur qui stocke un code de programme pour faire en sorte qu'un ordinateur exécute le procédé selon l'une des revendications 9 à 12.
